# EUROPEAN PATENT SPECIFICATION

(11) **EP 3 493 495 B1**
(45) Date of publication and mention of the grant of the patent: **25.12.2019**
(21) Application number: 18172443.6
(22) Date of filing: 15.05.2018
(51) Int. Cl.: H04L 12/933, H04Q 11/00

(54) **STRICT NON-BLOCKING SWITCHING NETWORK**
STRENG BLOCKIERUNGSFREIES SCHALTNETZ
RÉSEAU DE COMMUTATION STRICTEMENT NON BLOQUANT

(30) Priority: 29.11.2017 CN 201711221485
(43) Date of publication of application: 05.06.2019
(73) Proprietor: Toec Technologly Co., Ltd., 300210 Tianjin (CN)
(72) Inventor: ZHANG, Xiaofeng, Tianjin, 300210 (CN); LIU, Jia, Tianjin, 300210 (CN); HAO, Shuning, Tianjin, 300210 (CN); CHEN, Weifeng, Tianjin, 300210 (CN); FENG, Chen, Tianjin, 300210 (CN)
(74) Representative: Berkkam, Ayfer

(56) References cited:
- CN-U- 204 291 038
- US-A1- 2016 047 991
- SUNG-HYUK BYUN ET AL: "A universal multistage interconnection network for large scale ATM switches", GLOBAL TELECOMMUNICATIONS CONFERENCE, 1993, INCLUDING A COMMUNICATIONS THEORY MINI-CONFERENCE. TECHNICAL PROGRAM CONFERENCE RECORD, IEEE IN HOUSTON. GLOBECOM '93., IEEE HOUSTON, TX, USA 29 NOV.-2 DEC. 1, NEW YORK, NY, USA,IEEE, 29 November 1993 (1993-11-29), pages 19-23, XP010109673, DOI: 10.1109/GLOCOM.1993.318091 ISBN: 978-0-7803-0917-3

## Description

### Technical field

The present invention relates to the technical field of data exchange networks and in particular relates to a strict non-blocking switching network.

### Background

With the rapid development of communication technology, data exchange is very common. Traditional switching technologies, such as crossbar and clos networks, in some scenarios, are limiting people's choice due to the large switching structure, complex cascading routing, and high hardware cost.

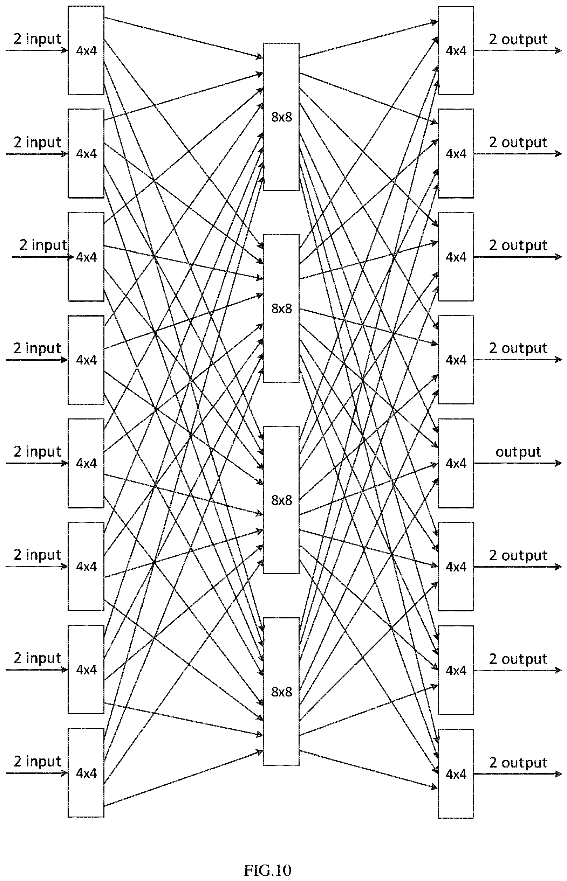

For example, the traditional three-level CLOS network is a three-layer switching network. As shown in FIG.10, the first layer consists of a plurality of n×m switching units , the number of n×m switching units are r, which is called the input layer; the second layer consists of a plurality of r×r switching units, the number of r×r switching units are m, which is called the middle layer; the third layer consists of a plurality of m×n switching units, the number of m×n switching units are r, which is called the output layer. There is only one link between each input layer switching unit and each middle layer switching unit, and there is only one link between each middle layer switching unit and each output layer switching unit, but there is no link between the input layer switching unit and the output layer switching unit. When m ≥ 2n-1, the three-layer CLOS network is strictly non-blocking network.

A strict non-blocking network means that no matter what state the network is in, as long as the starting point and the ending point of a connection are free, the connection can be established in the switching network at any time, without affecting the established connection in the network.

The following patent/patent application documents relate to switching network:
D1 CN204291038U, is to provide a strictly nonblocking switching network with a compact structure and a cascading line.
D2 US2016/047991A1, is to provide optical switch comprising a first stage comprising N optical inputs, wherein N is an integer power of 2 and is 16 or greater, and N first sub-switches, wherein each first sub-switch comprises 1 of the optical inputs and 4 first outputs, and a second stage coupled to the first stage and comprising 16 second sub-switches, wherein each second sub-switch comprises M second inputs and M second outputs, and wherein M is equal to N/4.
D3 SUNG-HYUK BYUN ET AL: "A universal multistage interconnection network for large scale ATM switches" (GLOBAL TELECOMMUNICATION CONFERENCE, 1993, INCLUDING A COMMUNICATIONS THEORY MINI-CONFERENCE. TECHNICAL PROGRAM CONFERENCE RECOD, IEEE IN HOUSTON. GLOBECOM '93., IEEE HOUSTON, TX, USA 29 NOV. 2 DEC.1, NEW YOURK, NY, USA, IEEE, 29 NOVEMBER 1993 (1993-11-29), pages 19-23, XP010109673, DOI: 10.1109/GLOCOM. 1993.318091 ISBN:978-0-7803-0917-3) discloses the UniMIN switch architecture.

### Summary

In view of the above discussion, the technical problem to be solved in the present invention is to provide a strict non-blocking switching network, which is compact in structure, ingenious in cascading routing, and can meet the requirements of a strict non-blocking network.

In order to solve the above technical problems, the present invention discloses a strict non-blocking switching network, and the present invention is implemented using the following technical solutions.

A strict non-blocking switching network includes a main switching module and an end switching module; the main switching module includes eight N×N center switching modules; the end switching module includes two 2N×2N switching modules; N is a multiple of four; the main switching module is located in a middle, the two 2N×2N switching modules of the end switching module are arranged on two sides of the main switching module respectively, and the two 2N×2N switching modules are respectively connected with the main switching module; and the eight N×N center switching modules are connected to each other.

The eight N×N central switching modules are arranged in two columns and four rows,
each of the central switching module is respectively provided with:
a plurality of external input channels, the number of the external input channels are N/2, which are input channels connected to the outside of the strict non-blocking switching network;
a plurality of internal input channels, the number of the internal input channels are N/2, which are input channels connected to the inside of the strict non-blocking switching network;
and a plurality of internal output channels, the number of the internal output channels are N, which are output channels connected inside the strict non-blocking switching network;
each of the two 2N×2N switching module is provided with a plurality of internal input channels connected to the inside of the strict non-blocking switching network and a plurality of external output channels connected to the outside of the strict non-blocking switching network, the number of the internal input channels are 2N, the number of the external output channels are 2N.

The internal input channels of each central switching module are respectively connected to the internal output channels of the central switching module arranged in a corresponding column; a half of the internal output channels of the central switching module are respectively connected to the internal input channels of the central switching module in corresponding column; another half of the internal output channels of the central switching module are respectively connected to a plurality of internal input channels of the switching module , where the switch chip is arranged in a corresponding column.

The eight N×N central switching modules are respectively a central switching module (1a), a central switching module (2a), a central switching module (3a), a central switching module (4a), a central switching module (1b), a central switching module (2b), a central switching module (2c) and a central switching module (2d). The left column from top to bottom includes: the central switching module (1a), the central switching module (2a), the central switching module (1b) and the central switching module (2b) in a connection; the right column from top to bottom includes: the central switching module (3a), the central switching module (4a), the central switching module (3b) and the central switching module (4b) in a connection; the two 2N×2N switching modules are respectively switching module (5) and switching module (6). The switching module (5) is located on the left side of the main switching module, and the switching module is located on the right side of the main switching module; a quarter of N of the internal input channels of the central switching module (1a) and the central switching module (2a) are respectively connected with a quarter of N of the internal output channels of the central switching module (3a) and the central switching module (4a); and a quarter of N of the internal output channels of the first central switching module (1a) and the second central switching module (2a) are respectively connected with a quarter of N of the internal input channels of the central switching module (3a) and the central switching module (4a).

A quarter of N of the internal input channels of the central switching module (1b) and the central switching module (2b) are respectively connected with a quarter of N of the internal output channels of the central switching module (3b) and the central switching module (4b); and a quarter of N the internal output channels of the central switching module (1b) and the central switching module (2b) are respectively connected with and a quarter of N of the internal input channels of the central switching module (3b) and the central switching module (4b).

A half of N of the internal output channels of the central switching module (1a) and the central switching module (2a) are respectively connected with a half of N of the internal input channels of the switching module (5).

A half of N of the internal output channels of the central switching module (3a) and the central switching module (3b) are respectively connected with a half of N of the internal input channels of the s switching module (6).

A half of N of the internal output channels of the central switching module (1b) and the central switching module (2b) are respectively connected with a half of N of the internal input channels of the switching module (5).

A half of N of the internal output channels of the central switching module (3b) and the central switching module (4b) are respectively connected with a half of N of the internal input channels of the switching module (6).

Compared with the prior art, the present invention can obtain the following technical effects: The complexity of the switching architecture is reduced, the amount and difficulty of cascade cabling is reduced, the hardware cost is reduced, and the flexibility of route selection during the exchange is improved.

Of course, any product that implements this invention does not necessarily need to achieve all the technical effects described above at the same time.

### Brief Description of the Drawings

The drawings described herein provide a further understanding of the present invention and constitute a part of the present invention. The exemplary embodiments of the present invention and descriptions thereof are used to explain the present invention and do not constitute improper limitations to the present invention. In the drawings:
FIG. 1 is a schematic diagram of a 4Nx4N switching network according to an embodiment of the present invention.
FIG. 2 is a schematic diagram of a 16x16 switching network according to an embodiment of the present invention.
FIG. 3 is a detailed structural diagram of a 16x16 switching network in the embodiment of FIG. 2 of the present invention.
FIG. 4 is a schematic diagram of a first 8x8 switching network of the present invention.
FIG. 5 is a schematic diagram of a second 8×8 switching network of the present invention.
FIG. 6 is a schematic diagram of a first 4x4 switching network of the present invention.
FIG. 7 is a schematic diagram of a second 4×4 switching network of the present invention.
FIG. 8 is a detailed structural diagram of a first 4x4 switching network of the present invention.
FIG. 9 is a schematic diagram of optical communication device communication of a 16×16 switching network of the present invention.
FIG. 10 is a schematic diagram of a conventional three-level CLOS switching network (a 16x16 switching network).

### Detailed Description

Hereinafter, embodiments of the present invention will be described in detail with reference to the accompanying drawings and embodiments, so as to fully understand and implement the technical means to solve technical problems and achieve technical effects in this invention.

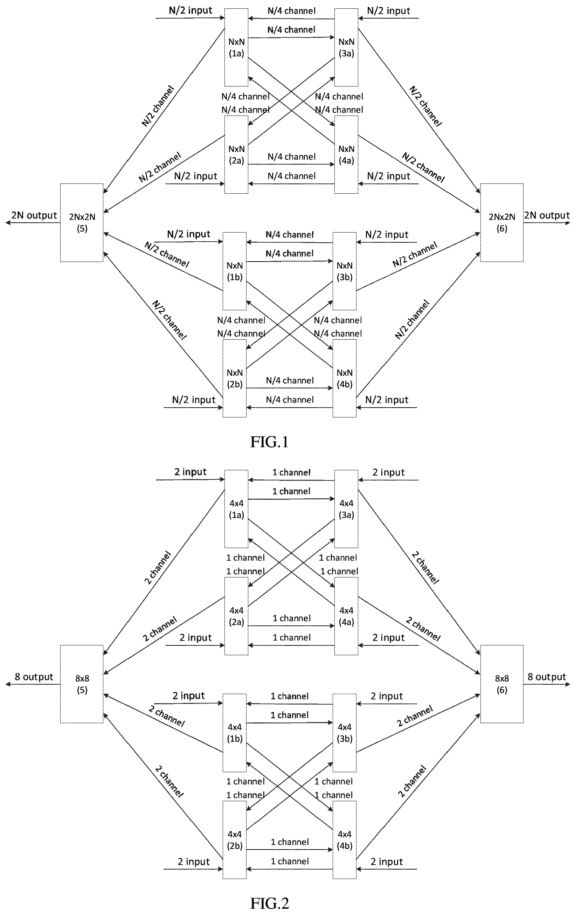

A strict non-blocking switching network, as shown in FIG.1, the strict non-blocking switching network is 4N×4N switching network, which includes main switching module and end switching module. The main switching module includes eight N×N center switching modules, and N must be a multiple of four; the end switching module includes two 2N×2N switching modules, and N must be a multiple of four. The eight N×N central switching modules are arranged in two columns and four rows in a connection relationship. The N×N central switching module represents that the central switching module has a plurality of input channels and a plurality of output channels, the number of the input channels are N, and the number of output channels are N. The 2N×2N switching module represents that the switching module has a plurality of input channels and a plurality of output channels, the number of input channels are 2N, and the number of the output channels are 2N.

Each of the eight N×N central switching modules is respectively provided with:
a plurality of external input channels connected to the outside of the switching network, the number of external input channels are N/2;
a plurality of internal input channels connected to the inside of the switching network, the number of internal input channels are N/2;
and a plurality of internal output channels connected to the inside of the switching network, the number of internal output channels is N.

The two 2N×2N switching modules, that is, 2N×2N switching module (5) and 2N×2N switching module (6), are respectively arranged on two sides of the switching network (i.e. on two sides of the eight N×N central switching module arrays). Each of the two 2N×2N switching module is provided with a plurality of internal input channels connected to the inside of switching network and a plurality of external output channels connected to the outside of the switching network, the number of internal input channels are 2N, the number of external output channels are 2N.

In Chinese patent document CN201410661871 (a strict non-blocking switching network), a strict non-blocking switching network with six N×N switching chips is disclosed, and this switching network has advantages over other traditional switching networks in a 32x32 switching network, such as streamlining switching architecture and reducing the number and difficulty of cascade cabling. However, this kind of switching network has a narrow range of applications. In the case of only N×N switching modules, six 2N×2N central switching chips are required to build a 4Nx4N switching network; and each 2N×2N central switching chip needs 6 N×N central switching chips to build; therefore, a total of 6x6=36 N×N switching chips are required, which is very large requirement.

In the present invention, the design of the eight N×N central switching modules and the two 2N×2N switching modules can effectively reduce the switching architecture. Only eight N×N central switching modules and two 2N×2N switching modules are needed, and each 2N×2N switching module requires six N×N switching modules, the present invention requires a total of 8+6x2=20 N×N switching modules.

Therefore, compared with the scheme in the patent document CN201410661871, the present invention can significantly reduce the number of used switching modules when using the N×N switching module to build a 4Nx4N switching network, further simplifying the switching architecture and reducing the amount of cascade cabling.

N/2 internal input channels of each of the central switching modules connected to the inside of the switching network are respectively connected to the internal output channels of the central switching module arranged in a column corresponding to each of the relevant the central switching modules. A half of N of the internal output channels of the central switching module are respectively connected to the internal input channels of the central switching module arranged in corresponding column, another half of N of the internal output channels of the central switching module are respectively connected to the internal input channels of the 2N×2N switching chip, where the 2N×2N switching chip is arranged in the column corresponding to the relevant central switching module, respectively.

Specifically, the eight N×N central switching modules are respectively central switching module 1a, central switching module 2a, central switching module 3a, central switching module 4a, central switching module 1b, central switching module 2b, central switching module 3b, and central switching module 4b. The left column from top to bottom includes central switching modules 1a, 2a, 1b and 2b; and the right column from top to bottom includes central switching modules 3a, 4a, 3b and 4b.

A quarter of N of the input channels of the N×N central switching module (1a) and a quarter of N of the input channels of the N×N central switching module (2a) are respectively connected with a quarter of N of the output channels of the N×N central switching module (3a) and a quarter of N of the output channels of the N×N central switching module(4a). A quarter of N of the output channels the N×N central switching module (1a) and a quarter of N of the output channels of the N×N central switching module (2a) are respectively connected with a quarter of N of the input channels of the N×N central switching module (3a) and a quarter of N of the input channels of the N×N central switching module(4a).

A quarter of N of the input channels of the N×N central switching module (1b) and a quarter of N of the input channels of N×N central switching module (2b) are respectively connected with a quarter of N of the output channels of the N×N central switching module (3b) and a quarter of N of the output channels of the N×N central switching module(4b). A quarter of N of the output channels of the N×N central switching module (1b) and a quarter of N of the output channels of the N×N central switching module (2b) are respectively connected with a quarter of N of the input channels of the N×N central switching module (3b) and a quarter of N of the input channels of the N×N central switching module (4b).

A half of N of the output channels of the N×N central switching module (1a) and the N×N central switching module (2a) are respectively connected with two sets of a half of N of the input channels of the 2N×2N switching module (5).

A half of N of the output channels of the N×N central switching module (3a) and the N×N central switching module (4a) are respectively connected with two sets of a half of N of the input channels of the 2N×2N switching module (6).

A half of N of the output channels of the N×N central switching module (1b) and the N×N central switching module (2b) are respectively connected with two sets of a half of N of the input channels of the 2N×2N switching module (5).

A half of the output channels of the N×N central switching module (3b) and the N×N central switching module (4b) are respectively connected with two sets of a half of N of the input channels of the 2N×2N switching module (6).

Both the central switching module and the switching module can meet the requirements of the switching chip.

The following is an example taking N=4 to explain in detail.

As shown in FIG.2, eight 4x4 switching chips and two 8x8 chips are used to implement a strictly non-blocking switching network with a cross-connection size of 16×16. The 4×4 switching chip has 4 input channels and 4 output channels, which can realize the 4x4 switching structure. The 8x8 switching chip has 8 input channels in and 8 output channels, which can realize the 8x8 switching structure.

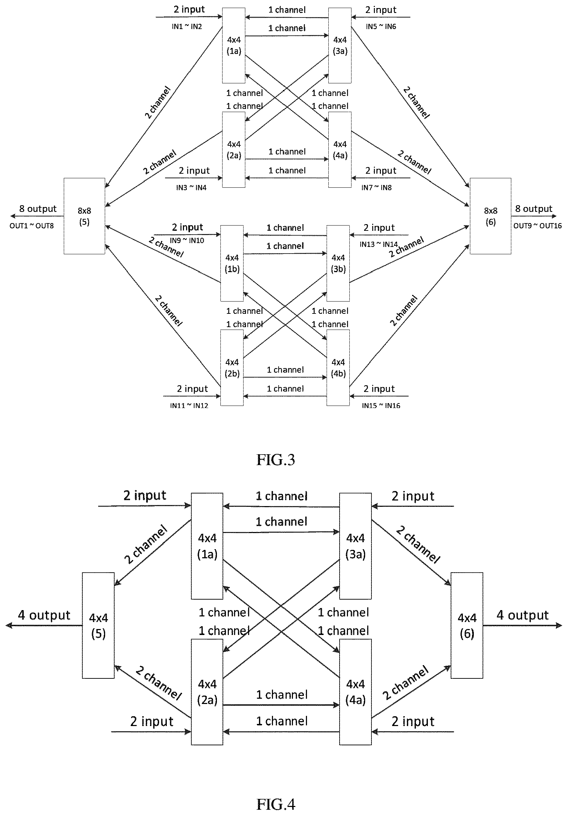

The overall description of the 16×16 switching network is as follows:
The 16x16 switching network is interconnected by eight 4x4 switching chips and two 8x8 switching chips. The 16 input channels are respectively distributed on eight 4x4 switching chips numbered as 1a, 2a, 3a, 4a, 1b, 2b, 3b, and 4b, and 16 output channels are respectively distributed on two 8x8 switching chips numbered as 5 and 6. For clear description, the 16 input channels connected to the outside of the switching network are labeled as IN1 to IN16, and the 16 output channels connected to the outside of switching network are marked as OUT1 to OUT16. The marked switching network is shown in FIG. 3.

Each 4×4 switching chip is provided with 4 input channels and 4 output channels. Each 8x8 switching chip is provided with 8 input channels and 8 output channels, among which the switching chip 1a, the switching chip 2a, and the switching chip 3a, the switching chip 4a, the switching chip 1b, the switching chip 2b, the switching chip 3b, and the switching chip 4b are respectively provided with two input channels connected to the outside of the switching network, and these two input channels are respectively marked as IN1∼IN2, IN3∼IN4, IN5∼IN6, IN7∼IN8,IN9∼IN10, IN11∼IN12, IN13∼IN14, and IN15∼IN16; the switching chip 1a, the switching chip 2a, the switching chip 3a, the switching chip 4a, the switching chip 1b, the switching chip 2b, the switching chip 3b, and the switching chip 4b are also respectively provided with two input channels connected to the inside of the switching network and four output channels connected to the inside of the switching network.

The switching chip 5 and the switching chip 6 are respectively provided with 8 output channels connected to the outside of the switching network, and these output channels are respectively marked as OUT1∼OUT8 and OUT9∼OUT16. The switching chip 5 and the switching chip 6 are also respectively provided with 8 input channels connected to the inside of the switching network.

The two input channels and two output channels of the switching chip 1a and the switching chip 2a are respectively connected to the two output channels and two input channels of the switching chip 3a and the switching chip 4a; the two output channels of the switching chip 1a and the switching chip 2a are respectively connected to two sets of two input channels of the switching chip 5; the two output channels of the switching chip 3a and the switching chip 4a are respectively connected to two sets of two input channels of the switching chip 6; the two input channels and two output channels of the switching chip 1b and the switching chip 2b are respectively connected to the two output channels and two input channels of the switching chip 3b and the switching chip 4b; the two output channels of the switching chip 1b and the switching chip 2b are respectively connected to two sets of two input channels of the switching chip 5; the two output channels of the switching chip 3b and the switching chip 4b are respectively connected to two sets of two input channels of the switching chip 6 .

The above 16×16 switched network are strictly non-blocking. For a switching network, strict non-blocking means that no blocking state occurs regardless of the routing strategy used. The strictly non-blocking mentioned in the present invention is limited to unicast. Unicast means that in a switching network, any one input can only be switched to one output at most.

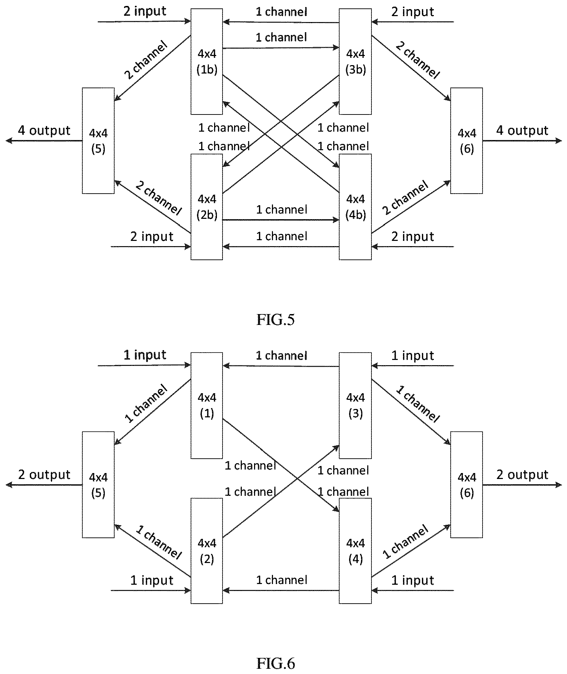

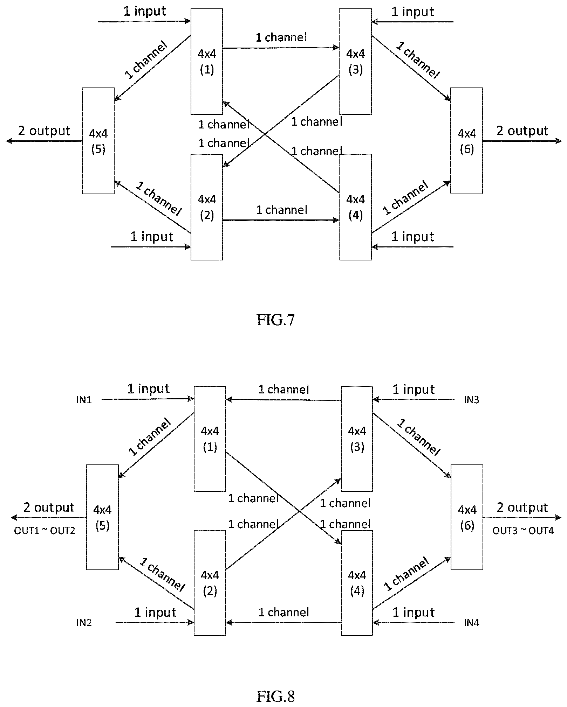

To prove that the 16x16 switching network shown in FIG. 3 is strictly non-blocking, the proof of thought is as follows:
1. Analyzing the structural characteristics of the network and disassembling the network model, splitting the 16×16 switching network into two 8×8 switching network structures, the 8×8 switching network structure is shown in FIG.4 and FIG.5. If it is proved that the 8×8 switching network is strictly non-blocking, the 16×16 switching network formed by the two 8×8 switching networks is also strictly non-blocking, because the two 8×8 switching networks do their own exchanges and do not affect each other.
2. To prove that the 8×8 switching network shown in FIG. 4 and FIG. 5 is strictly non-blocking, the 8×8 switching network can be disassembled first and then disassembled into two 4×4 switching networks as shown in FIG. 6 and FIG.7. If it is proved that the two 4×4 switching network are strictly non-blocking, the 8×8 switching network formed by the two 4×4 switching networks is also strictly non-blocking, because the two 4x4 switching networks do their own exchanges and do not affect each other.
3. Therefore, to prove that the 16×16 switch-switched network is strictly non-blocking, just need to prove that the two 4×4 switch networks shown in FIG. 6 and FIG.7 are strictly non-blocking.

Analyzing the two 4x4 switching networks shown in FIG.6 and FIG.7, it can be seen that as long as the 4×4 switching network in FIG. 6 is flipped horizontally by 180 degrees, the 4×4 switching network shown in FIG. 7 can be obtained. Therefore, as long as it is proved that the 4×4 switching network shown in FIG. 6 is strictly non-blocking, the 4x4 switching network shown in FIG. 7 is also strictly non-blocking.

In order to prove that the network shown in FIG. 6 is strictly non-blocking, the exchange network shown in FIG. 6 is marked in detail. The detailed structure is shown in FIG. 8.

As shown in FIG. 8, the marks IN1, IN2, IN3, and IN4 are respectively the input ends of the 4x4 switching chips numbered as 1, 2, 3, and 4; the marks OUT1, OUT2, OUT3, and OUT4 are respectively the output ends of the 4x4 switching chips numbered as 5 and 6.

The possible links of the four input ends to the two output ends are listed in sequence in table 1.

**Table 1**

| | | | |
|---|---|---|---|
| 1-5 | 2-5 | 3-1-5 | 4-2-5 |
| 1-4-2-5 | 2-3-1-5 | 3-1-4-2-5 | 4-2-3-1-5 |
| 1-4-6 | 2-3-6 | 3-6 | 4-6 |
| 1-4-2-3-6 | 2-3-1-4-6 | 3-1-4-6 | 4-2-3-6 |

The possible combinations of four input ends to two output ends are listed in table 2 when all crossing.

**Table 2**

| | | | |
|---|---|---|---|
| IN1--> 5 | IN2--> 6 | IN3--> 5 | IN4--> 6 |
| IN1--> 5 | IN2--> 6 | IN3--> 6 | IN4--> 5 |
| IN1--> 5 | IN2--> 5 | IN3--> 6 | IN4--> 6 |
| IN1--> 6 | IN2--> 5 | IN3--> 6 | IN4--> 5 |
| IN1--> 6 | IN2--> 5 | IN3--> 5 | IN4--> 6 |
| IN1--> 6 | IN2--> 6 | IN3--> 5 | IN4--> 5 |

Taking the first combination IN1-->5, IN2-->6, IN3-->5, and IN4-->6 as an example, the following optional links are listed as follows:
The optional link for N1-->5 is: 1-5 or 1-4-2-5;
The optional link for IN2-->6 is: 2-3-6 or 2-3-1-4-6;
The optional link for IN3-->5 is: 3-1-5 or 3-1-4-2-5;
The optional link for IN4-->6 is: 4-6 or 4-2-3-6.

When selecting links, the following points need attention:
a. Follow the principle of shortest path first.
b. Due to the structural limitation of the 4x4 switching network, only one link between two 4x4 switching chips is connected.
c. No matter which of the four input ends is selected first or which is selected at last, only when the four input ends are all successfully routed, the selecting is to be successful.

It is assumed that the routing order of the four input ends is IN1-->5, IN2-->6, IN3-->5, and IN4-->6, according to the three points mentioned in a, b, and c above, and the final link is:
The link selected by IN1-->5 is: 1-5;
The link selected by IN2-->6 is: 2-3-6;
The link selected by IN3-->5 is: 3-1-4-4-2-5;
The link selected by IN4-->6 is: 4-6.

In the same way, the other routing orders for the four ingress ports can also be selected successfully. Therefore, the combination (IN1-->5, IN2-->6, IN3-->5, and IN4-->6) can be selected successfully. In the same way, other combinations can also be selected successfully. Therefore, the 4x4 switching networks shown in FIG. 8 and FIG. 6 are strictly non-blocking. Since the 4x4 switching network shown in FIG. 7 is the result of turning the 4x4 switching network shown in FIG. 6 horizontally by 180 degrees, and the 4x4 switching network shown in FIG.6 is strictly non-blocking, so the 4×4 switching network shown in FIG. 7 is also strictly non-blocking. The two 4×4 switching networks shown in FIG. 6 and FIG. 7 are combined to obtain the 8×8 switching network shown in FIG.5, and since the two 4×4 switching networks are strictly non-blocking, the 8×8 switching network shown in FIG. 5 is also strictly non-blocking. The switching network shown in FIG. 4 is the same as the essence of FIG. 5 except that the names are different. Therefore, the 8×8 switching network shown in FIG. 4 is also strictly non-blocking. The two 8×8 switching networks shown in FIG. 4 and FIG. 5 are combined to obtain the 16×16 switching network shown in FIG. 3, since the two 8×8 switching networks are strictly non-blocking, the 16x16 switching network shown in FIG.3 is also strictly non-blocking. In FIG. 3, the switching chip 5 is 8×8, which can be regarded as two 4×4 do their own exchange, and the switching chip 6 is the same.

### 16x16 Switching Network Application Case

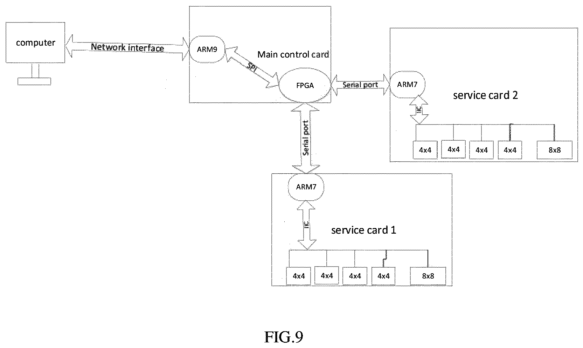

According to the 16×16 switching network, the present invention customizes a set of optical communication devices. As shown in FIG. 9, the specific design is as follows:
a case is internally composed of four board cards: main control card 7, power supply card 8, service card 9, and service card 10. The key processing components on the master control card are an ARM9 chip and an FPGA chip, the key processing components on each service card are an ARM7 chip. Each service card has four 4x4 switching chips and one 8x8 switching chip, the two service cards form a 16x16 switching network as shown in FIG. 2, among which five switching chips numbered as 1a, 2a, 1b, 2b, and 5 are on one service card, five switching chips numbered as 3a, 4a, 3b, 4b, and 6 are on another service card. The external interface of the device is the network interface on the main control card. The computer controls the device through the network interface.

The computer controls the communication with the ARM9 chip on the main control card through the network interface, the ARM9 chip and FPGA chip on the main control card control the communication through the SPI, the FPGA chip on the main control card and the ARM7 chip on two service cards control the communication through the serial port, the ARM7 chips on each service card are controlled by the IIC to control their respective three switching chips. When exchanging data, the procedure is as follows: first, the computer generates the exchange data, sends the exchange data to the ARM9 chip on the main control card through the network port, and then the ARM9 chip performs route calculation, calculates the specific link data to be switched, and sends the specific link data to the FPGA chip on the main control card through the SPI; then the FPGA chip sends the specific link data to be switched to the ARM7 chips on the two service cards through the serial port; finally, the ARM7 chip on each service card is exchanged through the IIC to control the corresponding switching chip to achieve the final exchange.

### Application effect of 16x16 switching network

The traditional three-level CLOS network is a three-layer switching network. The first layer consists of a plurality of n×m switching units, the number of n×m switching units are r, which is called the input layer; the second layer consists of a plurality of r×r switching units, the number of r×r switching units are m, which is called the middle layer; the third layer consists of a plurality of m×n switching units, the number of m×n switching units are r, which is called the output layer. There is one and only one link between each input layer switching unit and each middle layer switching unit, and there is one and only one link between each middle layer switching unit and each output layer switching unit, but there is no link between the input layer switching unit and the output layer switching unit. When m ≥ 2n-1, the three-layer CLOS network is strictly non-blocking network.

The detailed structure of a 16×16 strict non-blocking switching network constructed using a traditional clos network is shown in FIG. 10.

The optical communication devices using the 16×16 switching network of present invention and the optical communication device using the traditional Clos 16x16 switching network, the comparison of the two device indicators is as follows:

**Table 3**

| | |
|---|---|
| Customized device using the 16x16 switching network of the present invention | Customized device with traditional clos 16x16 switching network |
| Using eight 4x4 switching chips two 8x8 switching chips | Using sixteen 4x4 switching chips two 8x8 switching chips |
| A number of cascade cabling is 32 | A number of cascade cabling is 64 |
| The number of switching chips that need to be gone through is flexible when exchanging. When using the shortest path to exchange, the exchange data only needs to be sent directly from the ingress port to the egress port. | Any exchange must pass through 3 switching chips. Even if all links are idle, the first exchange must go through three switching chips. |

From the above comparison, it can be concluded that the device customized with the 16×16 switching network of the present invention requires only eight 4×4 switching chips and two 8×8 switching chips, and the hardware cost is reduced; the number of cascade cables is only 32, which reduces the amount and difficulty of cascade cabling.; and the flexibility of route selection when switching is improved.

The beneficial effects of this invention are as follows: the complexity of the switching architecture is reduced, the amount and difficulty of cascade cabling are reduced, the hardware cost is reduced, and the flexibility of route selection during the exchange is improved.

The foregoing describes in detail the novel strict non-blocking switching network provided by the embodiments of the present invention. The description of the above embodiments is only used to help understand the method and core idea of the present invention. At the same time, those skilled in the art may change the specific implementation manner and the invention scope according to the idea of the present invention.

Certain terms are used throughout the description and claims to refer to particular components. Those skilled in the art will understand that hardware manufacturers may use different terms to refer to the same component. This description and the claims do not use the difference in names as a means of distinguishing components but use the differences in the functions of components as the criteria for differentiation. As used throughout the specification and claims, "comprising" "include", "comprise", or "including" is an open language and should therefore be interpreted as "including but not limited to." "Approximate" means that a person skilled in the art can solve the technical problem within a certain error range within the acceptable error range, and basically achieve the technical effect. The subsequent description of the specification is intended to embody preferred embodiments of the present invention. However, the description is intended to illustrate general principles of the present invention and is not intended to limit the scope of the present invention. The scope of protection of the present invention shall be subject to the terms of the appended claims.

It should also be noted that the terms "include", "comprise", "including", "comprising" or any other variations thereof are intended to cover non-exclusive inclusions so that a commodity or system that includes a series of elements includes not only those elements but also other elements that are not explicitly listed, or include elements that are inherent to such commodity or system. In the case of no more limitation, the element defined by the sentence "includes a...", "including a...", "comprises a...", or "comprising a..." does not exclude the existence of additional identical elements in the commodity or system including the element.

The foregoing description shows and describes several preferred embodiments of the present invention, but as previously described, it should be understood that the present invention is not limited to the forms disclosed herein, and should not be considered as an exclusion of other embodiments, but may be used in various other combinations, modifications and environments ,and can be modified within the scope of the invention concept described herein through the above-mentioned teachings or related fields of technology or knowledge.

## Claims

1. A type of strict non-blocking switching network, comprising a main switching module and an end switching module, **characterized in that**: the main switching module comprises eight N×N center switching modules; the end switching module comprises two 2N×2N switching modules (5, 6); N is a multiple of four; the main switching module is located in a middle, the two 2N×2N switching modules (5, 6) are arranged on two sides of the main switching module respectively, and the two 2N×2N switching modules (5, 6) are respectively connected with the main switching module; the eight N×N center switching modules are connected to each other.

2. The type of strict non-blocking switching network according to claim 1, **characterized in that** the eight N×N central switching modules are arranged in two columns and four rows in a connection relationship:
each of the central switching modules is respectively provided with:
N/2 external input channels (IN1-IN2, IN3-IN4, IN5-IN6, IN7-IN8, IN9-IN10, IN11-IN12, IN13-IN14, IN15-IN16), which are input channels connected to the outside of the strict non-blocking switching network;
N/2 internal input channels, which are input channels connected to the inside of the strict non-blocking switching network;
and N internal output channels, which are output channels connected to the inside of the strict non-blocking switching network;
each of the two 2N×2N switching modules (5, 6) is provided with 2N internal input channels connected to the inside of the strict non-blocking switching network and 2N external output channels (OUT1-OUT8, OUT9-OUT16) connected to the outside of the strict non-blocking switching network.

3. The type of strict non-blocking switching network according to claim 2, **characterized in that**: the plurality of internal input channels of each of the central switching modules arranged in a first column are respectively connected to the plurality of internal output channels of the central switching modules arranged in a second column corresponding to the first column; a half of the N internal output channels of each of the central switching module arranged in the first column are respectively connected to the internal input channels of the central switching module corresponding to the first column,; another half of the N internal output channels of each of the central switching modules are respectively connected to the plurality of internal input channels of the switching module, wherein each of the another half of the internal output channels and each of the internal input channels of the switching chip corresponding to the second column.

4. The type of strict non-blocking switching network according to claim 3, **characterized in that**: the eight central switching modules are respectively a first central switching module (1a), a second central switching module (2a), a third central switching module (3a), a fourth central switching module (4a), a fifth central switching module (1b), a sixth central switching module (2b), a seventh central switching module (3b) and an eighth central switching module (4b);
the first column from top to bottom comprises: the first central switching module (1a), the second central switching module (2a), the fifth central switching module (1b) and the sixth central switching module (2b); the second column from top to bottom comprises: the third central switching module (3a), the fourth central switching module (4a), the seventh central switching module (3b) and the eighth central switching module (4b);
the two 2N×2N switching modules (5, 6) are respectively a first switching module (5) and a second switching module (6); the first switching module (5) is located on a left side of the main switching module, and the second switching module (6) is located on a right side of the main switching module;
N/4 of the internal input channels and N/4 of the internal output channels of the first central switching module (1a) and the second central switching module (2a) are respectively connected with N/4 of the internal input channels and N/4 of the internal output channels of the third central switching module (3a) and the fourth central switching module (4a);
N/4 of the internal input channels and N/4 of the internal output channels of the fifth central switching module (1b) and the sixth central switching module (1b) are respectively connected with N/4 of the internal input channels and N/4 of the internal output channels of the seventh central switching module (3b) and the eighth central switching module (4b);
N/2 of the internal output channels of the first central switching module (1a) and the second central switching module (2a) are respectively connected with N/2 of the internal input channels of the first switching module (5);
N/2 of the internal output channels of the third central switching module (3a) and the fourth central switching module (4a) are respectively connected with N/2 of the internal input channels of the second switching module (6);
N/2 of the internal output channels of the fifth central switching module (1b) and the sixth central switching module (2b) are respectively connected with N/2 of the internal input channels of the first switching module (5);
N/4 of the internal output channels of the seventh central switching module (3b) and the eighth central switching module (4b) are respectively connected with N/2of the internal input channels of the second switching module (6).

## Patentansprüche

1. Typ eines strengen, nicht blockierenden Schaltnetzwerks, umfassend ein Haupt-Schaltmodul und ein End-Schaltmodul, **dadurch gekennzeichnet, dass**: das Haupt-Schaltmodul acht NxN-Zentral-Schaltmodule umfasst; das End-Schaltmodul zwei 2Nx2N-Schaltmodule (5, 6) umfasst; N ist ein Vielfaches von vier; das Haupt-Schaltmodul in einer Mitte angeordnet ist, die beiden 2Nx2N-Schaltmodule (5, 6) jeweils auf zwei Seiten des Haupt-Schaltmoduls angeordnet sind, und die beiden 2Nx2N-Schaltmodule (5, 6) jeweils mit dem Haupt-Schaltmodul verbunden sind; die acht NxN-Zentral-Schaltmodule miteinander verbunden sind.

2. Typ eines strengen, nicht blockierenden Schaltnetzwerks nach Anspruch 1, **dadurch gekennzeichnet, dass** die acht NxN-Zentral-Schaltmodule in zwei Säulen und vier Reihen in einer Verbindungsbeziehung angeordnet sind:
jedes der Zentral- Schaltmodule ist jeweils ausgestattet mit:
N/2 externe Eingangskanäle (IN1-IN2, IN3-IN4, IN5-IN6, IN7-IN8, IN9-IN10, IN11-IN12, IN13-IN14, IN15-IN16), die Eingangskanäle sind, die an die Außenseite des strengen, nicht blockierenden Schaltnetzwerkes verbunden sind;
N/2 interne Eingangskanäle, die Eingangskanäle sind, die mit dem Inneren des strengen, nicht blockierenden Schaltnetzwerks verbunden sind;
und N interne Ausgangskanäle, die Ausgangskanäle sind, die mit dem Inneren des strengen, nicht blockierenden Schaltnetzwerks verbunden sind;
jedes der beiden 2Nx2N-Schaltmodule (5, 6) mit 2N internen Eingangskanälen ausgestattet ist, die mit der Innenseite des strengen, nicht blockierenden Schaltnetzwerks verbunden sind, und 2N externen Ausgangskanälen (OUT1-OUT8, OUT9-OUT16), die mit der Außenseite des strengen, nicht blockierenden Schaltnetzwerks verbunden sind.

3. Typ eines strengen, nicht blockierenden Schaltnetzwerks nach Anspruch 2, **dadurch gekennzeichnet, dass**: die Vielzahl der internen Eingangskanäle jedes der in einer ersten Säule angeordneten Zentral-Schaltmodule jeweils mit der Vielzahl der internen Ausgangskanäle der in einer zweiten Säule entsprechend der ersten Säule angeordneten Zentral-Schaltmodule verbunden sind; eine Hälfte der N internen Ausgangskanäle jedes der in der ersten Säule angeordneten Zentral-Schaltmodule jeweils mit den internen Eingangskanälen des Zentral-Schaltmoduls entsprechend der ersten Säule verbunden sind; eine weitere Hälfte der N internen Ausgangskanäle jedes der Zentral-Schaltmodule jeweils mit der Vielzahl der internen Eingangskanäle des Schaltmoduls verbunden sind, wobei jeder der anderen Hälfte der internen Ausgangskanäle und jeder der internen Eingangskanäle des Schaltchips der zweiten Säule entspricht.

4. Typ eines strengen, nicht blockierenden Schaltnetzwerks nach Anspruch 3, **dadurch gekennzeichnet, dass**: die acht Zentral-Schaltmodule sind jeweils ein erstes Zentral-Schaltmodul (1a), ein zweites Zentral-Schaltmodul (2a), ein drittes Zentral-Schaltmodul (3a), ein viertes Zentral-Schaltmodul (4a), ein fünftes Zentral-Schaltmodul (1b), ein sechstes Zentral-Schaltmodul (2b), ein siebtes Zentral-Schaltmodul (3b) und ein achtes Zentral-Schaltmodul (4b);
die erste Säule von oben nach unten umfasst: das erste Zentral-Schaltmodul (1a), das zweite Zentral-Schaltmodul (2a), das fünfte Zentral-Schaltmodul (1b) und das sechste Zentral-Schaltmodul (2b); die zweite Säule von oben nach unten umfasst: das dritte Zentral-Schaltmodul (3a), das vierte Zentral-Schaltmodul (4a), das siebte Zentral-Schaltmodul (3b) und das achte Zentral-Schaltmodul (4b);
die beiden 2Nx2N-Schaltmodule (5, 6) jeweils ein erstes Schaltmodul (5) und ein zweites Schaltmodul (6) sind; das erste Schaltmodul (5) befindet sich auf einer linken Seite des Haupt-Schaltmoduls, und das zweite Schaltmodul (6) befindet sich auf einer rechten Seite des Haupt-Schaltmoduls;
N/4 der internen Eingangskanäle und N/4 der internen Ausgangskanäle des ersten Zentral-Schaltmoduls (1a) und des zweiten Zentral-Schaltmoduls (2a) sind jeweils mit N/4 der internen Eingangskanäle und N/4 der internen Ausgangskanäle des dritten Zentral-Schaltmoduls (3a) und des vierten Zentral-Schaltmoduls (4a) verbunden;
N/4 der internen Eingangskanäle und N/4 der internen Ausgangskanäle des fünften Zentral-Schaltmoduls (1b) und des sechsten Zentral-Schaltmoduls (1b) sind jeweils mit N/4 der internen Eingangskanäle und N/4 der internen Ausgangskanäle des siebten Zentral-Schaltmoduls (3b) und des achten Zentral-Schaltmoduls (4b) verbunden.;
N/2 der internen Ausgangskanäle des ersten Zentral-Schaltmoduls (1a) und des zweiten Zentral-Schaltmoduls (2a) sind jeweils mit N/2 der internen Eingangskanäle des ersten Schaltmoduls (5) verbunden;
N/2 der internen Ausgangskanäle des dritten Zentral-Schaltmoduls (3a) und des vierten Zentral-Schaltmoduls (4a) sind jeweils mit N/2 der internen Eingangskanäle des zweiten Schaltmoduls (6) verbunden;
N/2 der internen Ausgangskanäle des fünften Zentral-Schaltmoduls (1b) und des sechsten Zentral-Schaltmoduls (2b) sind jeweils mit N/2 der internen Eingangskanäle des ersten Schaltmoduls (5) verbunden;
N/4 der internen Ausgangskanäle des siebten Zentral-Schaltmoduls (3b) und des achten Zentral-Schaltmoduls (4b) sind jeweils mit N/2 der internen Eingangskanäle des zweiten Schaltmoduls (6) verbunden.

## Revendications

1. Type de réseau strict de commutation non bloquant, comprenant un module de commutation principal et un module de commutation d'extrémité, **caractérisé en ce que** : le module de commutation principal comprend huit NxN modules de commutation centraux ; le module de commutation d'extrémité comprend deux 2Nx2N modules de commutation (5, 6) ; N est un multiple de quatre ; le module de commutation principal est situé au milieu, les deux 2Nx2N modules de commutation (5, 6) sont arrangés respectivement sur deux côtés du module de commutation principal, et les deux 2Nx2N modules de commutation (5, 6) sont respectivement connectés avec le module de commutation principal ; les huit NxN modules de commutation centraux sont connectés entre eux.

2. Type de réseau strict de commutation non bloquant selon la revendication 1, **caractérisé en ce que** les huit NxN modules de commutation centraux sont arrangés en deux colonnes et quatre rangées dans une relation de connexion :
chaque module de commutation central est équipé de :
N/2 canaux d'entrée externes (IN1-IN2, IN3-IN4, IN5-IN6, IN7-IN8, IN9-IN10, IN11-IN12, IN13-IN14, IN15-IN16), qui sont des canaux d'entrée connectés à l'extérieur du réseau strict de commutation non bloquant ;
N/2 canaux d'entrée internes, qui sont des canaux d'entrée connectés à l'intérieure du réseau strict de commutation non bloquant ;
et N canaux de sortie internes, qui sont des canaux de sortie connectés à l'intérieur du réseau strict de commutation non bloquant ;
chacun des deux 2Nx2N modules de commutation (5, 6) est équipé de 2N canaux d'entrée internes connectés à l'intérieur du réseau strict de commutation non-bloquant et 2N canaux de sortie externes (OUT1-OUT8, OUT9-OUT16) connectées à l'extérieur du réseau strict de commutation non bloquant.

3. Type de réseau strict de commutation non bloquant selon la revendication 2, **caractérisé en ce que**: la pluralité de canaux d'entrée internes de chacun des modules de commutation centraux agencés dans une première colonne sont respectivement connectés à la pluralité de canaux de sortie internes des modules de commutation centraux agencés dans une deuxième colonne correspondant à la première colonne ; la moitié des N canaux de sortie internes de chacun des modules de commutation centraux agencés dans la première colonne sont connectés respectivement aux canaux d'entrée internes du module de commutation central correspondant à la première colonne, ; une autre moitié des N canaux de sortie internes de chacun des modules de commutation centraux sont respectivement connectés à la pluralité des canaux d'entrée internes du module de commutation, dans laquelle chacune des autres moitiés des canaux de sortie internes et chacun des canaux d'entrée internes de la puce de commutation correspondant à la seconde colonne.

4. Type de réseau strict de commutation non bloquant selon la revendication 3, **caractérisé en ce que**: les huit modules de commutation centraux sont respectivement un premier module de commutation central (1a), un deuxième module de commutation central (2a), un troisième module de commutation central (3a), un quatrième module de commutation central (4a), un cinquième module de commutation central (1b), un sixième module de commutation central (2b), un septième module de commutation central (3b) et un huitième module de commutation central (4b) ;
la première colonne de haut en bas comprend : le premier module de commutation central (1a), le deuxième module de commutation central (2a), le cinquième module de commutation central (1b) et le sixième module de commutation central (2b) ; la deuxième colonne de haut en bas comprend : le troisième module de commutation central (3a), le quatrième module de commutation central (4a), le septième module de commutation central (3b) et le huitième module de commutation central (4b) ;
les deux 2Nx2N modules de commutation (5, 6) sont respectivement un premier module de commutation (5) et un deuxième module de commutation (6) ; le premier module de commutation (5) est situé sur un côté gauche du module de commutation principal, et le deuxième module de commutation (6) est situé sur un côté droit du module de commutation principal ;
N/4 des canaux d'entrée internes et N/4 des canaux de sortie internes du premier module de commutation central (1a) et du deuxième module de commutation central (2a) sont connectés respectivement avec N/4 des canaux d'entrée internes et N/4 des canaux de sortie internes du troisième module de commutation central (3a) et le quatrième module de commutation central (4a) ;
N/4 des canaux d'entrée internes et N/4 des canaux de sortie internes du cinquième module de commutation central (1b) et du sixième module de commutation central (1b) sont connectés respectivement avec N/4 des canaux d'entrée internes et N/4 des canaux de sortie internes du septième module de commutation central (3b) et du huitième module de commutation central (4b) ;
N/2 des canaux de sortie internes du premier module de commutation central (1a) et du deuxième module de commutation central (2a) sont connectés respectivement avec N/2 des canaux d'entrée internes du premier module de commutation (5) ;
N/2 des canaux de sortie internes du troisième module de commutation central (3a) et du quatrième module de commutation central (4a) sont connectés respectivement avec N/2 des canaux d'entrée internes du deuxième module de commutation (6) ;
N/2 des canaux de sortie internes du cinquième module de commutation central (1b) et du sixième module de commutation central (2b) sont connectés respectivement avec N/2 des canaux d'entrée internes du premier module de commutation (5) ;
N/4 des canaux de sortie internes du septième module de commutation central (3b) et du huitième module de commutation central (4b) sont connectés respectivement avec N/2 des canaux d'entrée internes du deuxième module de commutation (6).
